Europäisches Patentamt

European Patent Office

Office européen des brevets

(11) Veröffentlichungsnummer : **0 442 435 B1**

(12) **EUROPÄISCHE PATENTSCHRIFT**

(45) Veröffentlichungstag der Patentschrift :
**22.06.94 Patentblatt 94/25**

(21) Anmeldenummer : **91101926.3**

(22) Anmeldetag : **12.02.91**

(51) Int. Cl.⁵ : **B29B 17/00,** B29C 67/20,
// B29K75:00

(54) **Verfahren zur Wiederverwertung von Abfällen oder Altartikeln aus vernetztem Kunststoff, insbesondere aus Polyurethan oder Polyharnstoff.**

(30) Priorität : **14.02.90 DE 4004531**

(43) Veröffentlichungstag der Anmeldung :
**21.08.91 Patentblatt 91/34**

(45) Bekanntmachung des Hinweises auf die
Patenterteilung :
**22.06.94 Patentblatt 94/25**

(84) Benannte Vertragsstaaten :
**AT BE CH DE ES FR GB IT LI NL SE**

(56) Entgegenhaltungen :
**WO-A-89/03291**
**DE-A- 3 530 754**
**DE-A- 3 719 291**

(56) Entgegenhaltungen :
**US-A- 3 263 010**
**US-A- 3 996 154**
**PATENT ABSTRACTS OF JAPAN, Band 4, Nr.
154 (M-38)[636], 28. Oktober 1980; & JP-A-55
103 934 (NICHIEI KOGYO K.K.) 08-08-1980**

(73) Patentinhaber : **PHOENIX
AKTIENGESELLSCHAFT
Hannoversche Strasse 88
D-21079 Hamburg (DE)**

(72) Erfinder : **Meister, Burkhardt, Dr., Dipl.-Chem.
Wieterallee 27
W-3410 Northeim (DE)**
Erfinder : **Schaper, Herbert, Dr., Dipl.-Chem.
Hagedornstr. 22
W-2000 Hamburg 13 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Wiederverwertung (Recycling-Verfahren) von Abfällen oder Altartikeln aus vernetztem Kunststoff, insbesondere aus Polyurethan oder Polyharnstoff.

Bei der massenweisen Herstellung von Kleinteilen aus Kunststoff (z.B. Schaltergehäuse) fällt bei der Herstellung ein nicht unerheblicher Teil an Kunststoffabfällen an, der einen wertvollen Rohstoff darstellt. Dieser Rohstoff wurde bisher als Abfall betrachtet und entweder als Müll deponiert oder verbrannt.

Aus der EP-A-0 248 239 ist ein Verfahren zum Herstellen von Formteilen aus thermoplastischen Kunststoffabfällen bekannt, bei der die Kunststoffabfälle im Walzenextruder auf einen Druck von bis zu etwa 140 bar gebracht werden, wobei die vor der Extruderdüse liegende Form mit den plastifizierten Kunststoffabfällen unter dem Druck des Extruders gefüllt wird.

Aus der WO-A-89/03291 ist ferner ein Verfahren zum Herstellen von Formkörpern bekannt, bei dem gepreßtes Abfall-Granulat aus hartem Polyurethanschaum mit einem Bindemittel versetzt wird. Der Preßvorgang läuft dabei in einem zweistufigen Druckverfahren ab (Druck $\leqq$ 20 kp/cm$^2$ bei der ersten Stufe; Druck $\leqq$ 40 kp/cm$^2$ bei der zweiten Stufe).

Auch bei der Herstellung von Artikeln aus Gummi (Elastomer) wie Dichtungsprofile, Krümmer-Schläuche usw. fallen beachtliche Abfallmengen an, wobei in der DE-A-37 19 291 und EP-A-0 393 535 ein Verfahren zur Wiederverwertung von Gummiabfällen beschrieben wird.

In zunehmendem Maße werden aber auch große Teile eines Kraftfahrzeuges, beispielsweise Stoßfänger, Seitenverkleidungen und Spoiler anstelle aus Metall aus Kunststoffen hergestellt, wobei Polyurethan-Integralschaum bzw. Polyurethan-RIM-Werkstoffen eine besondere Bedeutung zukommt. Diese Großteile aus Kunststoff im Kraftfahrzeugbereich, aber auch aus anderen Herstellungsbereichen anderer Gegenstände, stellen ein erhebliches Entsorgungsproblem dar (ADAC Motorwelt, Dezember 1990).

Aufgabe der Erfindung ist es daher, Abfälle wie auch Altartikel aus vernetztem Kunststoff, insbesondere aus Polyurethan oder Polyharnstoff, aus umwelttechnologischen wie auch wirtschaftlichen Gesichtspunkten einer Wiederverwertung zuzuführen. Gelöst wird diese Aufgabe durch ein Verfahren gemäß Anspruchs 1.

Die erfindungswesentlichen Verfahrensstufen sind:

## Verfahrensstufe a

Zunächst werden die Abfälle bzw. Altartikel zerkleinert, beispielsweise zu Spänen oder Granulat, wobei die Größe des zerkleinerten Rohstoffes $\leqq$ 15 mm, insbesondere $\leqq$ 5 mm, beträgt. Dabei sollte der untere Grenzwert 0,5 mm sein.

Zwecks Entfernung eventuell störender Partikel wie Lackteile, Staub und Verstärkungsfasern (Glas- oder Kohlefasern) ist es zweckmäßig, wenn der zerkleinerte Rohstoff einem Trennverfahren durch Windsichten und/oder Sieben unterworfen wird.

## Verfahrensstufe b

Der zerkleinerte Rohstoff wird in einer thermo-mechanisch beanspruchenden Vorrichtung, insbesondere in einem Kneter (Innenmischer), 5 bis 30 (zweckmäßigerweise 15 bis 24) Minuten lang bei einer Vorrichtungstemperatur von 130 bis 180°C (zweckmäßigerweise 140 bis 160°C) bearbeitet. Dabei erfolgt ein mechanisch-thermischer Abbau ohne Massenverlust. Durch die Friktionswärme werden sicher Temperaturen bis zu 200°C oder darüber erreicht. Es resultiert ein plastischer Polymerkuchen (ähnlich Knetgummi, jedoch etwas bröseliger). Danach läßt man abkühlen. Diese Abbaumasse hat eine Hydroxyl- bzw. Aminzahl von 120 bis 180, und zwar je nach Abbaugrad und Mischungsmaterial, und ist unbegrenzt lagerfähig.

Zweckmäßigerweise ist die Vorrichtung druckbeaufschlagbar, insbesondere unter Einsatz eines Druckkneters. Der Druck beträgt dabei 2 bis 10 bar, insbesondere 6 bar.

## Verfahrensstufe c

Zur erneuten Vernetzung dieses Abbauproduktes wird ein polyfunktionelles Isocyanat eingesetzt, insbesondere bifunktionelles Desmodur TT (Additionsprodukt aus zwei Molekülen Desmodur T $\triangleq$ Toluylendiisocyanat, Fa. Bayer) oder bifunktionelles Desmodur 44 (4,4'-Diphenylmethandiisocyanat, Fa. Bayer), wobei die Vermischung in einem Kaltkneter bei einer Temperatur von 10 bis 30°C, insbesondere bei 20°, erfolgt. Dabei zerbröselt das Abbauprodukt, und es resultiert eine bröselige bis pulverige Masse. Es ist erfindungswesentlich, daß die Temperatur der Masse (Abbauprodukt und polyfunktionelles Isocyanat) $\leqq$ 80°C, zweckmäßigerweise $\leqq$ 60°C, beträgt, um eine vorzeitige Vernetzung zu verhindern. Das Mischungsverhältnis (in Gew.-

Teilen) von polyfunktionellem Isocyanat zu Abbauprodukt beträgt vorzugweise 10 bis 20 zu 100. Bei der Verwendung von Desmodur 44 sollte zum besseren Durchziehen der Beschleuniger Dabco TAC (Fa. Air Products) zugesetzt werden.

Verfahrensstufe d

Die Reaktionsmischung gemäß Verfahrensstufe c wird sofort abgekühlt, wobei die Abkühlung innerhalb von 10 Minuten erfolgen sollte, um ein Anvulkanisieren zu vermeiden. Diese Mischung ist innerhalb von 24 Stunden zu verarbeiten.

Verfahrensstufe e

Die Mischung wird abgewogen und schließlich 5 bis 20 (zweckmäßigerweise 15) Minuten lang bei 130 bis 170°C (zweckmäßigerweise 135°C) in einer Form bei einem Mindestpressendruck von 100 bar (z.B. 90 to bei einer Plattengröße von 150 x 200 mm) geheizt und dabei neu vernetzt.

Bei dem erfindungsgemäßen Wiederverwertungsverfahren resultieren relativ harte Produkte (Shore D = 60 bis 80) mit guten Zug- und Weiterreißfestigkeiten, aber mit relativ geringen Bruchdehnungen, wobei die Tabelle die diesbezüglichen Ergebnisse von sieben Versuchen unter verschiedenen Bedingungen festhält. Dabei ist insbesondere der Einfluß der Größe des zerkleinerten Rohstoffes, der Abbauzeit, der Temperatur sowie des Mengenanteils an polyfunktionellem Isocyanat auf die Shore-Härte, Zug- und Weiterreißfestigkeit sowie Bruchdehnung untersucht worden. Bei sämtlichen Versuchen wurde Polyurethan (Kurzform: PU) als Rohstoff eingesetzt. Die Prüfkörper wurden aus Platten gestanzt, die bei einer Preßtemperatur von 135°C hergestellt wurden.

Nach dem erfindungsgemäßen Verfahren wurden aus Abfällen oder Altartikeln aus vernetztem Kunststoff insbesondere folgende Artikel hergestellt:
- Kfz-Teile im Nichtsichtbereich, z.B. Steinschlag-Schutz-Abdeckungen, Schmutzabweiser, Kotflügelauskleidungen, Handschuhkästen, Deckel für Sicherungskästen, Fußstützen, Luftleitteile, Fußraumabdeckungen, Rücklichtverkleidungen, Deckel für Karosserieabdeckungen, Verkleidung für die Zentralelektrik, Wasserablauf, Reserveradabdeckung usw.;
- Teile im Nichtsichtbereich innerhalb des Maschinensektors;

| Daten (↓) / Versuch Nr. (→) | 1[i] | 2 | 3 | 4 | 5[i] | 6 | 7 |
|---|---|---|---|---|---|---|---|
| Versuchsbedingungen:[ii] | | | | | | | |
| Größe gemäß Verfahrensstufe a [mm] | 0,6 | 0,6 | 0,6 | 0,6 | 3 | 3 | 3 |
| Abbauzeit gemäß Verfahrensstufe b [min] | 18 | 24 | 18 | 24 | 18 | 18 | 18 |
| Temperatur gemäß Verfahrensstufe b [$^{\circ}$C] | 150 | 150 | 150 | 150 | 150 | 150 | 150 |
| Gew.-T Desmodur TT/100 Gew.-T PU | 12 | 12 | 16 | 16 | 12 | 16 | - |
| Gew.-T Desmodur 44/100 Gew.-T PU | - | - | - | - | - | - | 16 |
| mechanische Daten: | | | | | | | |
| Spez. Gewicht [g/mm$^3$] | 1,22 | 1,24 | 1,25 | 1,26 | 1,23 | 1,25 | 1,25 |
| Shore D | 62 - 63 | 64 | 72 | 73 | 64 - 66 | 70 | 79 |
| Zugfestigkeit [N/mm$^2$] | 7,3 - 8,9 | 8,4 | 21,2 | 22,5 | 5,2 - 5,3 | 13,5 | 32,2 |
| Bruchdehnung [%] | 4 - 5 | 5 | 14 | 12 | 2 | 5 | 6 |
| Weiterreißfestigkeit [N/mm] (nach Graves) | 21,7 - 24,2 | 18,4 | 41,3 | 42,8 | 30,9 - 35,9 | 36,7 | iii) |

i) Ergebnisse aus zwei Versuchen unter gleichen Bedingungen

ii) Sonstige Versuchsbedingungen: Ansprüche 5 bis 8, 11 bis 14

iii) nicht gemessen

EP 0 442 435 B1

**Patentansprüche**

1. Verfahren zur Wiederverwertung von Abfällen oder Altartikeln aus vernetztem Kunststoff, insbesondere aus Polyurethan oder Polyharnstoff, gekennzeichnet durch folgende Verfahrensstufen:

   a) die Abfälle bzw. Altartikel aus vernetzten Kunststoff als Rohstoff werden zerkleinert, beispielsweise zu Spänen oder Granulat, wobei die Größe des zerkleinerten Rohstoffes $\leqq$ 15 mm, insbesondere $\leqq$ 5 mm, beträgt;

   b) der zerkleinerte Rohstoff wird in einer thermomechanisch beanspruchenden Vorrichtung, insbesondere in einem Kneter, 5 bis 30 Minuten lang bei einer Vorrichtungstemperatur von 130 bis 180°C bearbeitet, wobei ein mechanisch-thermischen Abbau ohne Massenverlust erfolgt;

   c) zwecks erneuter Vernetzung wird in einer Mischvorrichtung, insbesondere in einem Kaltkneter, bei einer Vorrichtungstemperatur von $\leqq$ 30°C das Abbauprodukt gemäß Verfahrensstufe (b) mit einem polyfunktionellen Isocyanat bei einer Massentemperatur von $\leqq$ 80°C vermischt;

   d) die Reaktionsmischung wird innerhalb von 10 Minuten abgekühlt;

   e) die Mischung wird schließlich 5 bis 20 Minuten lang bei 130° bis 170°C in einer Form bei einem Mindestpressendruck von 100 bar geheizt und dabei neu vernetzt.

2. Verfahren nach Anspruch 1, dadurch gekennzeichnet, daß die Mindestgröße des zerkleinerten Rohstoffes 0,5 mm beträgt.

3. Verfahren nach Anspruch 1 oder 2, dadurch gekennzeichnet, daß der zerkleinerte Rohstoff zwecks Entfernung eventuell störender Partikel, z.B. Lackteile, Staub, Verstärkungsfasern, einem Trennverfahren durch Windsichten und/oder Sieben unterworfen wird.

4. Verfahren nach einem der Ansprüche 1 bis 3, dadurch gekennzeichnet, daß gemäß Verfahrensstufe (b) der zerkleinerte Rohstoff 15 bis 24 Minuten lang bei 140 bis 160°C, insbesondere bei 150°C, bearbeitet wird.

5. Verfahren nach einem der Ansprüche 1 bis 4, dadurch gekennzeichnet, daß gemäß Verfahrensstufe (b) die Vorrichtung druckbeaufschlagbar ist, insbesondere als Druckkneter .

6. Verfahren nach Anspruch 5, dadurch gekennzeichnet, daß der Druck 2 bis 10 bar, insbesondere 6 bar, beträgt.

7. Verfahren nach einem der Ansprüche 1 bis 6, dadurch gekennzeichnet, daß gemäß Verfahrensstufe (c) die Mischvorrichtung eine Temperatur von 10 bis 30°C, insbesondere 20°C, aufweist.

8. Verfahren nach einem der Ansprüche 1 bis 7, dadurch gekennzeichnet, daß gemäß Verfahrensstufe (c) die Massentemperatur $\leqq$ 60°C beträgt.

9. Verfahren nach einem der Ansprüche 1 bis 8, dadurch gekennzeichnet, daß gemäß Verfahrensstufe (c) das Mischungsverhältnis in Gew.-Teilen von polyfunktionellem Isocyanat zu Abbauprodukt 10 bis 20 zu 100 beträgt.

10. Verfahren nach einem der Ansprüche 1 bis 9, dadurch gekennzeichnet, daß gemäß Verfahrensstufe (c) 4,4'-Diphenylmethan-diisocyanat oder dimeres Toluylendiisocyanat eingesetzt wird.

11. Verfahren nach Anspruch 10, dadurch gekennzeichnet, daß bei Verwendung von 4,4'-Diphenylmethan-diisocyanat ein thermisch aktivierbares blockiertes Amin, d.h. ein quaternäres Ammoniumsalz, oder andere Aktivatoren zugesetzt werden.

12. Verfahren nach einem der Ansprüche 1 bis 11, dadurch gekennzeichnet, daß gemäß Verfahrensstufen (c, d) die Reaktionsmischung innerhalb von 24 Stunden weiterverarbeitet wird.

13. Verfahren nach einem der Ansprüche 1 bis 12, dadurch gekennzeichnet, daß gemäß Verfahrensstufe (e) die Vernetzungsreaktion 15 Minuten lang bei 135°C erfolgt.

14. Wiederverwertung von Abfällen oder Altartikeln aus vernetztem Kunststoff, insbesondere aus Polyurethan oder Polyharnstoff, unter Ausübung des Verfahrens nach einem der Ansprüche 1 bis 13 zur Herstellung von Artikeln im Nichtsichtbereich innerhalb des Kfz- und Maschinensektors.

## Claims

1. A process for re-using scraps or waste articles composed of cross-linked synthetic resin, in particular polyurethane or polyurea, characterised by the following process steps:

    a) the scraps or waste articles composed of crosslinked synthetic resin in the form of raw material are crushed, for example into chips, or granulate, where the size of the crushed raw material < 15 mm, in particular $\leqq$ 5 mm;

    b) the crushed raw material is processed in a device applying thermomechanical energy, in particular a kneader, for 5 to 30 minutes at a device temperature of 130 to 180°C, whereby a mechanical-thermal decomposition takes place without loss of mass;

    c) for renewed cross-linking, in a mixing device, in particular a cold kneader, the decomposition product according to process step (b) is mixed with a polyfunctional isocyanate at a mass temperature of $\leqq$ 80°C and at a device temperature of $\leqq$ 30°C;

    d) the reaction mixture is cooled within 10 minutes;

    e) the mixture is finally heated for 5 to 20 minutes at 130°C to 170°C in a mould at a minimum pressure of 100 bar and is thereby cross-linked again.

2. A process as claimed in Claim 1, characterised in that the minimum size of the crushed raw material is 0.5 mm.

3. A process as claimed in Claim 1 or 2, characterised in that the crushed raw material is subjected to a separating process by air classification and/or sieving in order to remove any disturbing particles, for example lacquer components, dust, strengthening fibres.

4. A process as claimed in one of Claims 1 to 3, characterised in that, in accordance with process step (b), the crushed raw material is processed for 15 to 24 minutes at 140 to 160°C, in particular at 150°C.

5. A process as claimed in one of Claims 1 to 4, characterised in that, in accordance with process step (b), the device can be acted upon by pressure, in particular as a pressure kneader.

6. A process as claimed in Claim 5, characterised in that the pressure amounts to 2 to 10 bar, in particular 6 bar.

7. A process as claimed in one of Claims 1 to 6, characterised in that, in accordance with process step (c), the mixing device has a temperature of 10 to 30°C, in particular 20°C.

8. A process as claimed in one of Claims 1 to 7, characterised in that, in accordance with process step (c), the mass temperature amounts to $\leqq$ 60°C.

9. A process as claimed in one of Claims 1 to 8, characterised that, in accordance with process step (c), the mixture ratio in parts by weight of polyfunctional isocyanate to decomposition product amounts to 10 to 20 : 100.

10. A process as claimed in one of Claims 1 to 9, characterised in that, in accordance with process step (c), 4.4′-diphenylmethane-diisocyanate or dimeric toluylene diisocyanate is used.

11. A process as claimed in Claim 10, characterised in that when 4.4′-diphenylmethane diisocyanate is used, a thermally activatable, blocked amine i.e. a quaternary ammonium salt or other activators are added.

12. A process as claimed in one of Claims 1 to 11, characterised in that, in accordance with process steps (c, d) the reaction mixture is further processed within 24 hours.

13. A process as claimed in one of Claims 1 to 12, characterised in that in accordance with process step (e), the cross-linking reaction takes place for 15 minutes at 135°C.

14. The re-use of scraps or waste articles composed of cross-linked synthetic resin, in particular polyurethane or polyurea, applying the process claimed in one of Claims 1 to 13, for the production of articles in non-visible zones within the motor vehicle and machine sector.

## Revendications

1. Procédé de recyclage de déchets ou d'articles usagés en matière plastique réticulée, en particulier en polyuréthanne ou en polyurée, caractérisé par les étapes opératoires suivantes:

   a) les déchets ou articles usagés en matière plastique réticulée, utilisés comme matière première, sont fragmentés en petits morceaux, par exemple en copeaux ou en granulé, la grosseur de particules de la matière première fragmentée étant $\leqq$ 15 mm, en particulier $\leqq$ 5 mm:

   b) la matière première fragmentée en petits morceaux est travaillée dans un dispositif produisant une contrainte thermo-mécanique, en particulier dans un malaxeur, pendant 5 à 30 mn, à une température du dispositif de 130 à 180°C, ce qui produit une dégradation thermo-mécanique sans perte de masse:

   c) afin de rétablir la réticulation, le produit de dégradation issu de l'étape opératoire (b) est mélangé à un isocyanate polyfonctionnel à une température de la masse $\leqq$ 80°C, dans un dispositif mélangeur, en particulier dans un malaxeur à froid, à une température du dispositif $\leqq$ 30°C;

   d) le mélange réactionnel est refroidi dans les 10 mn;

   e) le mélange est enfin chauffé et ainsi réticulé de nouveau pendant 5 à 20 mn à 130-170°C, dans un moule, sous une pression minimale de moulage de 100 bar.

2. Procédé selon la revendication 1, caractérisé en ce que la grosseur minimale de particules de la matière première fragmentée est de 0,5 mm.

3. Procédé selon la revendication 1 ou 2, caractérisé en ce que la matière première fragmentée est soumise à un traitement de séparation par dépoussiérage pneumatique et/ou tamisage, afin d'éliminer les particules perturbatrices éventuellement présentes, par exemple des fragments de vernis-émail, la poudre fine ou des fibres de renforcement.

4. Procédé selon l'une quelconque des revendications 1 à 3, caractérisé en ce que, dans l'étape opératoire (b), la matière première fragmentée est travaillée pendant 15 à 24 mn à une température de 140 à 160°C, en particulier de 150°C.

5. Procédé selon l'une quelconque des revendications 1 à 4, caractérisé en ce que, dans l'étape opératoire (b), le dispositif peut être mis sous pression, en particulier sous forme de malaxeur sous pression.

6. Procédé selon la revendication 5, caractérisé en ce que la pression est de 2 à 10 bar, en particulier de 6 bar.

7. Procédé selon l'une quelconque des revendications 1 à 6, caractérisé en ce que, dans l'étape opératoire (c), le dispositif de mélange est à une température de 10 à 30°C, en particulier de 20°C.

8. Procédé selon l'une quelconque des revendications 1 à 7, caractérisé en ce que, dans l'étape opératoire (c), la température de la masse est $\leqq$ 60°C.

9. Procédé selon l'une quelconque des revendications 1 à 8, caractérisé en ce que, dans l'étape opératoire (c), le rapport de mélange en parties en poids de l'isocyanate polyfonctionnel au produit de dégradation est de 10-20 à 100.

10. Procédé selon l'une quelconque des revendications 1 à 9, caractérisé en ce que, dans l'étape opératoire (c), on utilise du diisocyanate de 4,4'-diphènylméthane ou du diisocyanate de toluylène dimère.

11. Procédé selon la revendication 10, caractérisé en ce qu'en cas d'utilisation de diisocyanate de 4,4'-diphénylméthane, on ajoute une amine bloquée, activable thermiquement, c'est-à-dire un sel d'ammonium quaternaire, ou d'autres activateurs.

12. Procédé selon l'une quelconque des revendications 1 à 11, caractérisé en ce que, dans les étapes opératoires (c, d), le mélange réactionnel est transformé dans les 24 h.

13. Procédé selon l'une quelconque des revendications 1 à 12, caractérisé en ce que, dans l'étape opératoire (e), la réaction de réticulation est conduite pendant 15 mn à 135°C.

14. Recyclage de déchets ou d'articles usagés en matière plastique réticulée, en particulier en polyuréthanne ou en polyurée, par application du procédé selon l'une quelconque des revendications 1 à 13, pour la fabrication d'articles dans la région non visible, dans les secteurs de l'automobile et des machines.